# EUROPEAN PATENT SPECIFICATION

(11) **EP 1 499 481 B1**
(45) Date of publication and mention of the grant of the patent: **29.12.2010**
(21) Application number: 04707279.8
(22) Date of filing: 02.02.2004
(51) Int. Cl.: B28B 7/36

(54) **METHOD FOR MANUFACTURING SLABS MADE OF STONE-LIKE AGGLOMERATED MATERIAL HAVING AN AGED UPPER SURFACE**
VERFAHREN ZUM HERSTELLEN VON STEINZEUG-PLATTEN MIT GEALTERT AUSSEHENDER OBERFLÄCHE
PROCEDE DE FABRICATION DE DALLES CONSTITUEES DE MATERIAU AGGLOMERE DE TYPE PIERRE POSSEDANT UNE SURFACE SUPERIEURE VIEILLIE

(30) Priority: 05.02.2003 IT VR20030012
(43) Date of publication of application: 26.01.2005
(73) Proprietor: Stone Italiana S.p.A., 37135 Verona (IT)
(72) Inventor: DALLA VALLE, Roberto, I-37012 Bussolengo (IT)
(74) Representative: Petraz, Gilberto Luigi
(86) International application number: PCT/IT2004/000036
(87) International publication number: WO 2004/069505

(56) References cited:
- GB-A- 1 127 296
- US-A- 2 140 197
- US-A- 4 213 926

## Description

### TECHNICAL FIELD

The present invention relates to a method for obtaining antique-look slabs made of stone agglomerate material.

More specifically, the present invention relates to a method for obtaining slabs made of agglomerate material consisting of crushed pieces of stone compacted by means of binders, which can be used for the production of tiles, hobs and in general kitchen worktops, steps for staircases, etc., said sheets having an antique-look outer surface.

The invention applies mainly to the industrial processing sector for marble, stone, granite and the like.

### BACKGROUND ART

It is known that in order to obtain sheets made of agglomerate material, the following procedure is normally used:
- a step of crushing the stone raw material,
- a step of mixing the crushed stone raw material and an inert filler with a binder,
- a step of pouring the mixture into a special die on the base of which there is a layer of special paper, normally polyethylene-coated;
- a step of covering the mixture with another layer of special paper, normally polyethylene-coated;
- a step of vibration and vacuum pressing of the mixture previously prepared;
- a step of heating in an oven at a predetermined temperature and for a predetermined time, in order to obtain a binder catalysis reaction;
- a step of removing, by grinding, the polyethylene-coated paper upper surface layer.

The sheets obtained from the firing step are then subjected to steps of polishing and/or cutting and/or chamfering and/or gauging and/or flaring.

Finally, as the last step the above-mentioned sheets may be cut to obtain pieces of a predetermined shape.

A process like the one described above makes it possible to obtain panels or sheets made of agglomerate material with lengths, widths and thicknesses which are precisely predetermined, and may be implemented continuously by a special plant.

The paper layer advantageously consists of polyethylene-coated paper comprising a layer of paper fixed to a polyethylene film by layers of adhesives. Improved results are achieved when using a paper support impregnated with polyethylene deposited by spraying.

One disadvantage is the fact that the panels obtained by die forming always require processing on machine tools in order to produce the desired configuration on the finished product and removal of the polyethylene-coated paper affects the cost of the finished product.

This final processing may also result in rejects which, considering that this is one of the final operations, have a considerable effect on the total production costs.

Moreover, such processing to remove shavings adds to the overall production times and creates dust and residues which are sometimes difficult to dispose of.

If the polyethylene-coated paper is to be detached from the sheet without using machine tools to remove it, the surfaces obtained would be quite irregular, having an original antique look.

In such cases, one disadvantage is the fact that the surface of the sheet below the polyethylene-coated paper is extremely porous, tending to retain liquid and dust residues present in the environment, with inevitable periodic buildups of dirt.

Another disadvantage is the fact that this porosity accelerates corrosive phenomena which, over time, cause the sheet made of agglomerate material to break.

### DISCLOSURE OF THE INVENTION

The aim of the present invention is to provide a process for obtaining sheets made of stone agglomerate material able to overcome or significantly reduce the above-mentioned disadvantages and having an antique look.

Another aim of the present invention is to provide an antique-look sheet made of stone agglomerate material which can be obtained with minimum cost and minimum waste and consumption of raw materials and processing tools.

This is achieved with a process for obtaining antique-look sheets having the features described in the main claim.

It is also achieved by means of an antique-look sheet made of stone agglomerate material having the features described in claims 6 to 8.

The dependent claims outline advantageous embodiments of the invention.

Document GB-A-1127296 discloses a process for producing foamed gypsum castings which comprises the steps of mixing calcium sulphate hemilhydrate with water to form a pourable or pumpable slurry, introducing into said slurry calcium carbonate and sulphuric acid in quantities sufficient to generate sufficient foam-forming carbon dioxide gas in situ within said slurry to reduce the density of the final product, the sulphuric acid being added in sufficient excess to accelerate setting of the slurry, and casting the foaming slurry in a mould having at least one internal face lined with non-porous polyolefin-coated material. Said foaming gypsum slurry does not contain any binding resin and is not pressed. Moreover, the provision of polyethylene paper has the specific aim to obtain a plaster surface which is a relatively smooth one.

### DESCRIPTION OF THE DRAWINGS

Other features and advantages of the invention are evident in the description which follows of an embodiment of the invention, by way of example and in no way limiting the scope of application, with reference to the accompanying drawing, which illustrates a sheet made of antique-look agglomerate material obtained using a process disclosed.

### DESCRIPTION OF A PROCESS ACCORDING TO THE INVENTION

The process disclosed consists of the following steps:
- a first step of crushing the various materials of which the agglomerate consists;
- a second step of mixing the crushed materials, to obtain as homogeneous a product as possible, during which the binding resins are added;
- a third step of preparation of a special die on the base of which there is a layer of special paper, advantageously polyethylene-coated paper;
- a fourth step of pouring the crushed materials into the die;
- a fifth steep of covering the pressed agglomerate material with a second layer of special paper, advantageously polyethylene-coated paper;
- a sixth step of pressing and compacting the agglomerate, during which the desired shape is obtained;
- a seventh step of hardening the sheet or panel at a predetermined temperature;
- an eighth step of separating the second layer of paper from the sheet made of agglomerate material obtained;
- a ninth step of polishing the surfaces of the sheet; in which the step of separating the second layer of polyethylene-coated paper from the sheet is performed by simply lifting the paper in a. single piece, leaving the sheet with an antique-look surface in view.

A process like the one described above makes it possible to obtain antique-look sheets or panels made of agglomerate material with lengths, widths and thicknesses which are precisely predetermined, and is implemented continuously by a special automated plant.

The production of an antique-look sheet made of stone agglomerate material according to the invention requires minimum resources in terms of processing times and tool consumption.

The antique-look sheet exits the die forming unit as a product which is almost finished, since polishing makes it possible to obtain, on the sheet, an impermeable surface layer needed to prevent any corrosion and the penetration of dirt into the pores of the material.

Simply lifting the upper layer of polyethylene-coated paper guarantees an antique-look surface on the sheet, highlighting irregularities in its shape (ridges and depressions) as well as slight cracks.

### DESCRIPTION OF THE DRAWINGS

Other features and advantages of the invention are evident in the description which follows of an embodiment of the invention, by way of example and in no way limiting the scope of application, with reference to the accompanying drawing, which illustrates a sheet made of antique-look agglomerate material obtained using a process disclosed.

### DESCRIPTION OF AN EMBODIMENT

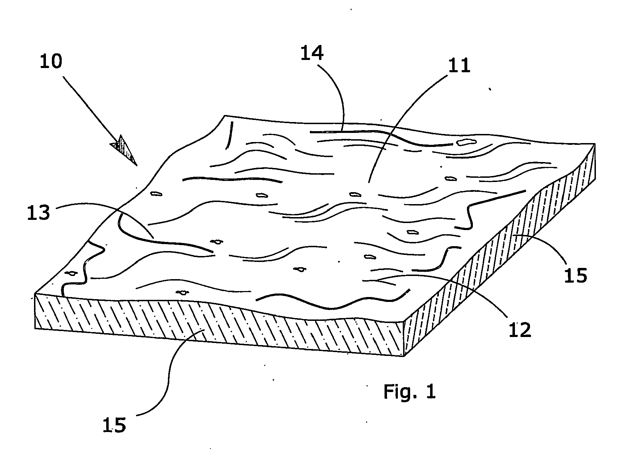

In Figure 1, the reference number 10 generally indicates a sheet of stone agglomerate material, in the case in question a sheet 10 with an antique-look surface 11 in view.

The surface 11 has ridges 12 and depressions 13 which are evenly distributed and micro-cracks 14.

The plan of the sheet 10 may have a quadrangular configuration.

The edges 15 of the sheet 10 are smooth, regular and well squared so that the panel 10 can easily be used for immediate laying or for subsequent processing.

The invention is described above with reference to a particular embodiment. It is nevertheless clear that the invention is not limited to this embodiment but is also susceptible to numerous variations, within the framework of technical equivalents.

## Claims

1. A method for obtaining antique-look slabs (10) made of stone agglomerate material which includes:
- crushing a plurality of stone materials as to form an agglomerate;
- mixing the crushed materials while simultaneously adding at least one binding resin as to obtain a homogeneous agglomerate mix;
- pouring the homogeneous agglomerate mix onto a shaped die until he shaped die is full as to form a panel of homogeneous agglomerate mix, the shaped die having in the base a first layer of polyethylene-coated paper;
- covering the shaped die with a second layer of polyethylene coated paper;
- pressing and compacting the panel of homogeneous mix in the shaped die;
- hardening the panel at a predetermined temperature;
- separating the second layer of polyethylene-coated paper from the panel,
**characterised in that** the separation of the second layer of polyethylene-coated paper from the panel is carried out by lifting and removing the second layer of polyethyene-coated paper substantially in a single piece, leaving the slab or panel with an antique-look surface in view, and **in that** the outer surface of the slab or panel is polished immediately after removal of the polyethylene-coated paper.

2. The method according to claim 1, in which the step of polishing the sheet (10) is performed in order to obtain an impermeable surface layer on the surface of the sheet in view.

3. The method according to claims 1 and 2, **characterised in that** the polishing step is performed using titanium grinding wheels designed not to alter the configuration of the surface (11) in view.

4. The method according to any of the foregoing claims, **characterised in that** it is implemented continuously.

5. The method according to any of the foregoing claims, **characterised in that** the polyethylene-coated paper is impregnated with sprayed polyethylene.

6. A slab or panel (10) made of stone agglomerate material, having a surface (11) in view which has evenly distributed ridges (12) and depressions (13) designed to give it an antique look, **characterised in that** it is manufactured in accordance with a process according to one of the claims from 1 to 5.

7. The slab (10) according to claim 6, **characterised in that** the surface (11) in view has a polished and impermeable surface layer.

8. The slab (10) according to claims 6 and 7, **characterised in that** the edges (15) are smooth, regular and squared.

## Patentansprüche

1. Verfahren zur Herstellung von antik aussehenden Platten (10), die aus einem agglomerierten Steinmaterial gefertigt sind, umfassend:
- Zerkleinern einer Mehrzahl von Steinmaterialien, um ein Agglomerat auszubilden;
- Vermischen des zerkleinerten Materials, während gleichzeitig zumindest ein Kunstharzbindemittel zugegeben wird, um so eine homogene Agglomeratmischung zu erhalten;
- Einfüllen der homogenen Agglomeratmischung in eine geformte Gussform, bis die geformte Gussform voll ist, um so eine Platte aus der homogenen Agglomeratmischung zu bilden, wobei die geformte Gussform an der Basis eine erste Schicht aus einem polyethylenbeschichteten Papier aufweist;
- Abdecken der geformten Gussform mit einer zweiten Schicht aus einem polyethylenbeschichteten Papier;
- Pressen und Kompaktieren der Platte aus der homogenen Agglomeratmischung in der geformten Gussform;
- Aushärten der Platte bei einer bestimmten Temperatur;
- Abtrennen der zweiten Schicht aus polyethylenbeschichteten Papier von der Platte,
**dadurch gekennzeichnet, dass**
das Abtrennen der zweiten Schicht aus polyethylenbeschichteten Papier von der Platte durch Anheben und Entfernen der zweiten Schicht aus polyethylenbeschichteten Papier ausgeführt wird, und zwar im Wesentlichen in einem Stück, so dass die Platte oder Tafel mit einer antik aussehenden sichtbaren Oberfläche verbleibt, und dass
die äußere Oberfläche der Platte oder Tafel sofort nach der Entfernung des polyethylenbeschichteten Papiers poliert wird.

2. Verfahren nach Anspruch 1, wobei der Schritt des Polierens der Platte (10) ausgeführt wird, um eine undurchlässige Oberflächenschicht auf der sichtbaren Oberfläche der Platte zu erhalten.

3. Verfahren nach einem der Ansprüche 1 oder 2, **dadurch gekennzeichnet, dass** der Schritt des Polierens mittels Titanschleifscheiben ausgeführt wird, die derart entworfen sind, dass sie die Konfiguration der sichtbaren Oberfläche (11) nicht ändern.

4. Verfahren nach irgendeinem der vorherigen Ansprüche, **dadurch gekennzeichnet, dass** es kontinuierlich ausgeführt wird.

5. Verfahren nach irgendeinem der vorherigen Ansprüche, **dadurch gekennzeichnet, dass** das polyethylenbeschichtete Papier mit aufgesprühtem Polyethylen imprägniert ist.

6. Platte oder Tafel (10), hergestellt aus einem agglomerierten Steinmaterial, mit einer sichtbaren Oberfläche (11), die gleichmäßig verteilte Erhebungen (12) und Vertiefungen (13) aufweist, derart entworfen, dass ein antikes Aussehen erreicht ist, **dadurch gekennzeichnet, dass** die Platte in übereinstimmung mit einem Verfahren nach einem der Ansprüche 1 bis 5 hergestellt ist.

7. Platte (10) nach Anspruch 6, **dadurch gekennzeichnet, dass** die sichtbare Oberfläche (11) eine polierte und undurchlässige Oberflächenschicht aufweist.

8. Platte (10) nach einem der Ansprüche 6 oder 7, **dadurch gekennzeichnet, dass** die Kanten (15) glatt, regelmäßig und eckig sind.

## Revendications

1. Procédé d'obtention de dalles (10) de style antique fabriquées à partir d'un matériau aggloméré de type pierre, lequel procédé inclut les étapes consistant à :
- broyer une pluralité de matériaux de type pierre de façon à former un aggloméré ;
- mélanger des matériaux broyés tout en ajoutant au moins une résine liante de manière à obtenir un mélange aggloméré homogène :
- verser le mélange aggloméré homogène sur une matrice en forme jusqu'à ce que la matrice en forme soit remplie de manière à former un panneau de mélange aggloméré homogène, la matrice en forme ayant au fond une première couche de papier recouvert de polyéthylène ;
- recouvrir la matrice en forme d'une seconde couche de papier recouvert de polyéthylène ;
- presser et compacter le panneau de mélange homogène dans la matrice en forme ;
- durcir le panneau à une température prédéterminée ;
- séparer la seconde couche de papier recouvert de polyéthylène du panneau,
**caractérisé en ce que** la séparation de la seconde de couche de papier recouvert de polyéthylène du panneau est réalisée en soulevant et en retirant la seconde couche de papier recouvert de polyéthylène sensiblement d'une seule pièce, ce qui dote la dalle ou le panneau d'une surface visible de style antique, et **en ce que** la surface extérieure de la dalle ou du panneau est polie immédiatement après avoir retiré le papier recouvert de polyéthylène.

2. Procédé selon la revendication 1, dans lequel l'étape consistant à polir la feuille (10) est réalisée dans le but d'obtenir une couche de surface imperméable sur la surface visible de la feuille.

3. Procédé selon les revendications 1 et 2, **caractérisé en ce que** l'étape de polissage est effectuée en utilisant des roues de broyage au titane conçues pour ne pas modifier la configuration de la surface visible (11).

4. Procédé selon l'une quelconque des revendications précédentes, **caractérisé en ce qu'**il est mis en oeuvre de façon continue.

5. Procédé selon l'une quelconque des revendications précédentes, **caractérisé en ce que** le papier recouvert de polyéthylène est imprégné de polyéthylène pulvérisé.

6. Dalle ou panneau (10) fabriqué à partir de matériau aggloméré de type pierre, présentant une surface visible (11) qui possède des arêtes (12) et des dépressions (13) uniformément distribuées qui sont destinées à lui conférer un style antique, **caractérisé en ce qu'**il est fabriqué conformément à un procédé selon l'une des revendications 1 à 5.

7. Dalle (10) selon la revendication 6, **caractérisée en ce que** la surface visible (11) possède une couche de surface imperméable et polie.

8. Dalle (10) selon les revendications 6 et 7, **caractérisée en ce que** les bords (15) sont lisses, réguliers et à angles droits.
